# EUROPÄISCHE PATENTSCHRIFT

(11) **EP 4 194 324 B1**
(45) Veröffentlichungstag und Bekanntmachung des Hinweises auf die Patenterteilung: **01.10.2025**
(21) Anmeldenummer: 22212261.6
(22) Anmeldetag: 08.12.2022
(51) Int. Cl.: B62D 33/02, B60P 3/41, B60P 3/40

(54) **ANORDNUNG ZUR VERÄNDERUNG DER GRÖSSE EINES LASTRAUMES**
DEVICE FOR CHANGING THE SIZE OF A LOAD SPACE
DISPOSITIF DE MODIFICATION DE LA TAILLE D'UN ESPACE DE CHARGE

(30) Priorität: 09.12.2021 DE 202021106729 U; 20.12.2021 DE 202021106927 U
(43) Veröffentlichungstag der Anmeldung: 14.06.2023
(73) Patentinhaber: Sedlmayer GmbH, 07819 Triptis (DE)
(72) Erfinder: Sedlmayer, Johann, 07819 Triptis (DE)
(74) Vertreter: Meissner Bolte Partnerschaft mbB

(56) Entgegenhaltungen:
- DE-B4- 10 235 922
- DE-C- 812 284
- DE-C2- 19 911 872
- DE-T5- 10 393 286
- US-B2- 8 388 284

## Beschreibung

Die Erfindung betrifft eine Anordnung zur Veränderung der Größe eines Lastraumes eines Lastentransportfahrzeuges oder eines Lastentransportanhängers, welche jeweils eine Vielzahl von Rungen als seitliche Laststützen aufweisen, wobei die Rungen jeweils mit einem Rahmen einer Rungenbank in Verbindung stehen und mindestens ein Teil der Rungen beweglich am Rahmen gelagert ist, derart, dass eine Positionsveränderung der jeweiligen Runge zum Rahmen und damit eine Abstandsveränderung gegenüberliegender Rungen realisierbar ist, wobei die Mittel zur Abstandsänderung gegenüberliegender Rungen frei von einer Linear- oder Geradführung ausgebildet sind, gemäß Oberbegriff des Anspruches 1.

Aus der US 8388284 B ist ein Rungenkorb eines Lastraumes vorbekannt, welcher eine Rahmenkomponente mit zwei Enden sowie eine Stützkomponente aufweist. Die Stützkomponente ist an mindestens einem Ende der Rahmenkomponente angelenkt. Zwei Rungenarme können mit Hilfe einer Hydraulik und einer Gelenkanordnung in verschiedene Positionen bewegt werden, wobei sich die offenen Enden der Rungenarme in ihrem Abstand verändern.

Der Rückezug zum Rücken von Kurz- oder Langholz nach DE 199 11 872 C2 umfasst ein Fahrzeug, wobei am hinteren Ende ein Rungenkorb zur Aufnahme von Holz sitzt. Der Rungenkorb besteht aus beiderseits aufgereihten Rungen. Die Rungenbank ist hinsichtlich der Höhe über dem Untergrund verstellbar. Darüber hinaus sind die Rungen an der Rungenbank angelenkt. Die Rungen sind über eine Buchse und mittels einer Achse an der Rungenbank fixiert. Durch einen Versatz zwischen der vorerwähnten Achse und der Längsorientierung der Runge kann der Rungenabstand variiert werden.

Bei der gattungsbildenden DE 102 35 922 B4 wird von einem Verfahren zur Veränderung der Fläche eines Lastraumes einer Arbeitsmaschine ausgegangen.

Zum Verändern des Lastraumes sei beispielsweise die Möglichkeit gegeben, die den Lastraum begrenzenden Rungen teleskopisch zu verlängern. Auch wird erwähnt, dass es bekannt ist, Rungen seitlich verschiebbar auszubilden.

Die Veränderung der Fläche und der Höhe eines Lastraumes ist dann erforderlich, wenn es gilt, die gesamte Kapazität eines Lastfahrzeuges auszunutzen.

Bekannte Lösungen sollen insofern den Nachteil aufweisen, dass das Öffnen von manuellen Verriegelungen erschwert und für die notwendige Arbeitssicherheit abträglich ist.

Gemäß der DE 102 35 922 B4 soll die Aufgabe gelöst werden, eine Veränderung der Breite des Lastraumes ohne zusätzliche Mittel und in einfacher Weise zu erreichen. Das Gewicht der aufgenommenen Last soll keine Verschiebung der Rungenpositionen ermöglichen. Grundsätzlich dienen hierbei die Rungen als Seitenstütze, in denen selbige eine horizontale Lastverschiebung verhindern. Teilweise ist der die Rungen tragende Rahmenteil gebogen, so dass sich eine U- oder Y-Form ausbildet, wobei die Last vertikal in die vorerwähnte Y-Richtung abgetragen wird. Die Konstruktion der entsprechenden Rungen und der Befestigungsmittel ist so gewählt, dass ein Umkippen oder Neigen der Runge unter Belastung wirksam verhinderbar ist. Bei der vorbekannten Lösung wird von einem Pendelarm ausgegangen, der an seinem Ende an einem Ausgangsteil befestigt ist und der durch ein Gelenk drehbar um eine Drehachse angeordnet wird. Der Pendelarm ist beispielsweise als Stange, metallischer Streifen oder in Form eines Scharniers ausgestaltet. Die Bewegung des Pendelarmes wird mittels einer linearen Führung in eine Lageveränderung der betreffenden Runge umgewandelt, wobei die Länge der nutartigen Führung in Verbindung mit jeweiligen Achsstummeln die Rungenlage bestimmt.

Es ist jedoch offensichtlich, dass die Ausbildung von Nuten, Langlöchern oder dergleichen größeren Ausnehmungen im Rahmen bzw. der Rungenbank zu einer Materialschwächung führt. Weiterhin kann in die jeweilige Führungsnut Schmutz oder es können Holzreste eindringen, die die gewünschte Positionsveränderung im Sinne einer Abstandswahl der Rungen behindern.

Aus dem Vorgenannten ist es daher Aufgabe der Erfindung, eine weiterentwickelte Anordnung zur Veränderung der Größe eines Lastraumes eines Lastentransportfahrzeuges oder eines Lastentransportanhängers anzugeben, welche in einfacher Weise und mit geringem Aufwand eine Veränderung des Abstandes von Rungen, die als seitliche Laststützen dienen, ermöglicht.

Die Lösung der Aufgabe der Erfindung erfolgt gemäß einer Anordnung der Merkmalskombination nach Anspruch 1, wobei die Unteransprüche mindestens zweckmäßige Ausgestaltungen und Weiterbildungen darstellen.

Es wird demnach von einer Anordnung zur Veränderung der Größe eines Lastraumes eines Lastentransportfahrzeuges oder eines Lastentransportanhängers ausgegangen. Der Lastentransporthänger oder das Lastentransportfahrzeug weist zur Lastenaufnahme eine Vielzahl von Rungen als seitliche Laststützen auf, wobei die Rungen jeweils mit einem Rahmen einer Rungenbank in Verbindung stehen. Mindestens ein Teil der Rungen ist beweglich am Rahmen gelagert, derart, dass eine Positionsveränderung der jeweiligen Runge zum Rahmen und damit eine Abstandsveränderung gegenüberliegender Rungen realisierbar ist.

Gemäß der Erfindung sind die Mittel zur Abstandsveränderung gegenüberliegender Rungen frei von einer wie auch immer gearteten Linear- oder Geradführung.

Aufgrund dieses Erfindungsgedankens ist es nicht notwendig, in tragende Elemente, insbesondere der Rungenbank, Führungsausnehmungen einzubringen, die zu einer Materialschwächung führen und die darüber hinaus möglichen Verschmutzungen unterliegen.

Gemäß der Erfindung ist am rungenseitigen Ende des Rahmens eine im Wesentlichen vertikal orientierte Buchse vorgesehen. Diese Buchse nimmt eine Achse auf, die mit einem Schlossplattenpaar in Verbindung steht.

Das Schlossplattenpaar geht in eine Rungensteckbuchse über, wobei das Schlossplattenpaar mitsamt der Rungensteckbuchse um die jeweilige Achse verschwenkbar ist. Diese Verschwenkbarkeit erfolgt mit Hilfe der erwähnten, am rungenseitigen Ende des Rahmens vorgesehenen, vertikal orientierten Buchse. Weiterhin weist die Buchsenoberseite eine Rastkrone auf, welche zu einer Rastkrone an der Unterseite einer Schlossplatte des Schlossplattenpaares komplementär ist derart, dass eine Arretierung in unterschiedlichen Schwenkpositionen realisiert werden kann.

Zum Entriegeln der jeweiligen Rastung erfolgt ein Ausheben der Rastkronenpaarung. Die Verriegelungsstellung wird schwerkraftbedingt selbsttätig gehalten.

Die Rastkrone stellt sich als eine Abfolge von im Wesentlichen mäanderförmigen, rechteckig verlaufenden Vor- und Rücksprüngen dar, deren Weite die Winkelschritte der möglichen Schwenkpositionen bestimmt.

In der jeweiligen Rungensteckbuchse kann ein, auch teleskopierbares und damit längenveränderliches Rungenrohr kraft- und/oder formschlüssig fixiert werden.

Bei einer Alternative der gleichen Erfindung ist am rungenseitigen Ende des Rahmens ein Parallelogrammgelenk vorgesehen, welches zwei im Wesentlichen horizontal beabstandete Rahmenachsen und zwei im Wesentlichen horizontal beabstandete Exzenterarmachsen aufweist.

Die vorerwähnten Achsen stehen jeweils mit einem Paar Gelenkplatten in Wirkverbindung.

Am Außenende geht der Exzenterarm in eine Rungensteckbuchse über, wobei der Exzenterarm in einem Zug geführt durch das Parallelogrammgelenk von einer ersten horizontalen Position in eine zweite, von der ersten beabstandeten horizontalen Position beweglich ist.

Im Bereich der Exzenterarmachsen ist am Exzenterarm jeweils mindestens ein Schutzkragen ausgebildet, welcher gleichzeitig eine Greifhilfe zum Ausführen des Verschwenkens oder Verkippens zur Positionsveränderung bildet.

Zusätzlich kann am Innenende des Exzenterarms ein Greifhaken ausgebildet werden.

Am Rahmen und am Exzenterarm sind in einer Weiterbildung der Erfindung Verriegelungsmittel vorgesehen. Diesbezüglich können entsprechende Verriegelungslaschen ausgebildet werden, die eine Aufnahme für einen Bolzen oder zum Beispiel einen Karabinerhaken zur Lagearretierung umfassen.

In einer Weiterbildung der Erfindung ist zwischen dem Rahmen der Rungenbank und dem Exzenterarm ein Schmutzabstreifer vorhanden, der bei der Lageveränderung und Bewegung des Exzenterarmes in der Lage ist, im Verstell- oder Verschwenkbereich anhaftende Verschmutzungen zu entfernen.

Auch bei der zweiten Ausführungsform besteht die Möglichkeit, dass die Rungensteckbuchse nicht nur längenmäßig fixe Rohre, sondern auch entsprechend teleskopierbare Rungen aufnimmt.

Ebenso kann die betreffende Rungensteckbuchse und die jeweilige Runge eine bauliche Einheit bilden und als einstückiges Teil ausgeführt sein.

Bei der ersten Ausführungsform der Erfindung erfolgt also zunächst für die gewünschte Abstandsveränderung gegenüberliegender Rungen ein Ausheben der Verrastung mit anschließenden Verschwenken um die Achse, welche von der Buchse am Ende des Rahmens aufgenommen wird.

Durch Absenken kommt es wieder zu einer wirksamen Verrastung und einer Verriegelung, die bedingt durch die Masse des Schlossplattenpaares nebst Rungensteckbuchse und aufgenommener Runge beibehalten bleibt.

Bei der Ausführungsform der Erfindung mittels Parallelogrammgelenk kann die gewünschte Abstandsveränderung in einem Zug, zum Beispiel maschinenunterstützt durch einen Krangreifarm, vorgenommen werden, der unter Nutzung der Greifhilfen bzw. des Greifhakens eine Kraft auf den Exzenterarm bzw. die jeweilige, mit dem Exzenterarm verbundene Runge ausübt. Mit Erreichen der gewünschten Endlage, das heißt bei maximaler Abstandsvergrößerung zwischen gegenüberliegenden Rungen liegt der Exzenterarm mit seiner diesbezüglichen Oberfläche komplett im Bereich des entsprechenden Rahmenendes auf und befindet sich mithin in einer Lage sicher außerhalb des Übertotpunktes des Parallelogrammgelenks. Für ein Rückstellen wird wiederum beispielsweise die entsprechende Runge mittels Krangreifer erfasst und begrenzt durch die Verschwenkbewegung des Parallelogrammgelenkes in Richtung Längsachse des entsprechenden Lastentransporthängers oder Lastentransportfahrzeuges bewegt. Auch in dieser Stellung kommt es zu einer Berührung der gegenüberliegenden Oberflächen zwischen Rungenbank bzw. Rahmen und Exzenterarm. Zusätzlich kann eine mechanische Verriegelung mit Hilfe der erwähnten Verriegelungselemente erfolgen.

Insbesondere die erste Ausführungsform der Erfindung mit Rastkronenarretierung ist zum Nachrüsten bereits vorhandener Technik geeignet.

Die Erfindung soll nachstehend anhand von Ausführungsbeispielen sowie unter Zuhilfenahme von Figuren näher erläutert werden.

Hierbei zeigen:
- Fig. 1a: eine perspektivische Ansicht einer ersten Ausführungsform mit Rungenschwenkverbreiterung und Rastkrone in einer maximal ausgeschwenkten Position;
- Fig. 1b: eine Darstellung ähnlich derjenigen nach Fig. 1a, jedoch in Seitenansicht;
- Fig. 1c: eine Prinzipdarstellung der Rungenschwenkverbreiterung mit angedeuteten Schwenkwinkel und sich ergebenden Verbreiterungsmaß;
- Fig. 2a: eine Seitenansicht auf eine Rungenbank mit Rahmen und zwei gegenüberliegenden Rungen im Grundzustand der Lösung nach dem Prinzip der Rungenschwenkverbreiterung;
- Fig. 2b: eine Darstellung ähnlich derjenigen nach Fig. 2a, jedoch in Draufsicht;
- Fig. 3a: eine Darstellung der Lösung auf der Basis einer Rungenschwenkverbreiterung im ausgeschwenkten Zustand;
- Fig. 3b: eine Darstellung ähnlich derjenigen nach Fig. 3a, jedoch in Draufsicht;
- Fig. 4a - c: eine Darstellung des Grundzustandes im eingeschwenkten Zustand mit verriegelter Rastkrone (Fig. 4a), eine Darstellung während des Herausschwenkens zur Abstandsvergrößerung mit ausgehobener und entriegelter Rastkrone (Fig. 4b) und eine Darstellung im vollausgeschwenkten Zustand mit wieder verriegelter Rastkrone im Ergebnis eines Absenkvorganges (Fig. 4c);
- Fig. 5: eine perspektivische Darstellung einer Ausführungsform der Erfindung mit einer Abstandsveränderung gegenüberliegender Rungen auf der Basis der Nutzung einer Ausbildung eines Parallelogrammgelenkes, wobei linksseitig ein beispielhafter maximal ausgeschwenkter Zustand der betreffenden Runge und rechtsseitig der eingeschwenkte Zustand illustriert ist und die Möglichkeit der Ausbildung einer Längenverstellung von Rungen mittels Teleskoprohr;
- Fig. 6a: eine Seitenansicht der Ausführungsform mit Parallelogrammgelenk in einem Grundzustand, das heißt eingeschwenkter Position;
- Fig. 6b: eine Darstellung ähnlich derjenigen nach Fig. 6a, jedoch in perspektivischer Ansicht;
- Fig. 7a: eine Seitenansicht der Ausführungsform mit Parallelogrammgelenk-Verschwenkmöglichkeit im maximalem Ausschwenkzustand, bei dem das maximale Verlängerungsmaß erreicht ist;
- Fig. 7b: eine perspektivische Darstellung ähnlich derjenigen nach Fig. 7a, jedoch mit erkennbarem Schmutzabstreifer;
- Fig. 8a: eine Darstellung der Ausführungsform mit Parallelogrammgelenk und einem normalen, nicht verbreiterten Laderaumprofil, definiert durch einen Abstand der Rungen der jeweiligen Rungenbank;
- Fig. 8b: eine Darstellung ähnlich derjenigen nach Fig. 8a, jedoch mit vergrößertem, das heißt verbreitertem Laderaumprofil durch maximalen Abstand der sich gegenüberstehenden Rungen;
- Fig. 8c: eine Darstellung ähnlich derjenigen nach Fig. 8b, jedoch mit teleskopartiger Verlängerung der Rungen zum Erhöhen des Laderaumprofils;
- Fig. 9: zwei verschiedene Ansichten der Ausbildung einer teleskopierbaren Runge in einer Grundposition mit eingefahrenem Rungenkopf;
- Fig. 10: zwei verschiedene Ansichten einer teleskopierten Runge in einer oberen Rastposition mit erkennbarem Prinzip der notwendigen Fixierung der Teleskoprunge, das heißt des lagefixierten Teleskoprungeneinsatzes bei entsprechender maximaler Auszugslänge;
- Fig. 11a: eine perspektivische Detailansicht der Ausführungsform zur Abstandsveränderung mittels Parallelogrammgelenk mit aktiviertem Verriegelungselement; und
- Fig. 11b: eine Darstellung ähnlich derjenigen nach Fig. 11a, jedoch entriegelt und dem Verriegelungselement in Parkposition.

Es sei an dieser Stelle darauf hingewiesen, dass die Figuren für den verständigen Fachmann selbsterklärend und auch ohne zusätzliche Erläuterung verständlich sind. Alle, für den Fachmann in den Figuren erkennbaren Lösungsansätze und Details gehören mithin zur erfindungswesentlichen Offenbarung.

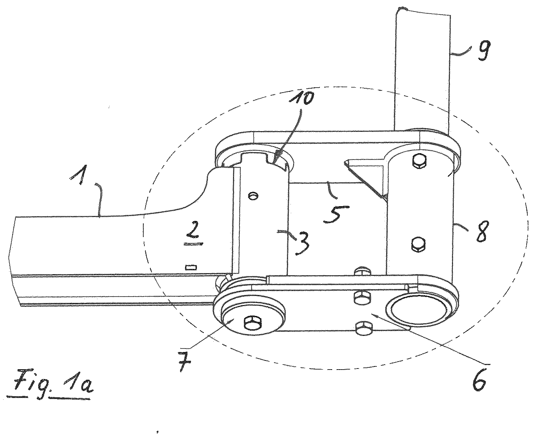

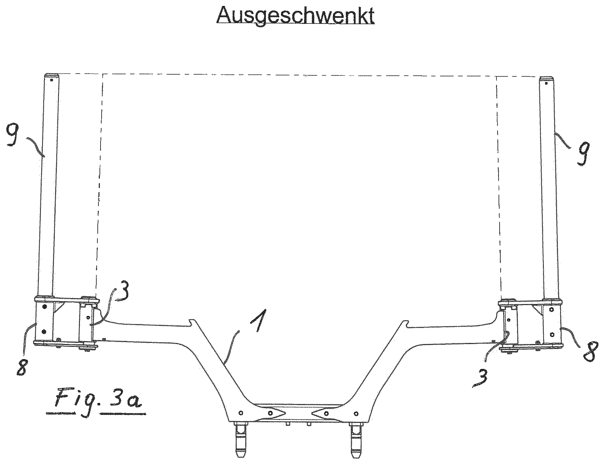

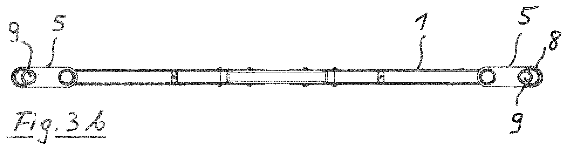

Bei der Ausführungsform auf der Basis einer Rungenschwenkverbreiterung gemäß den Figuren 1a bis 4c wird zunächst von einer Rungenbank 1, umfassend einen Rungenrahmen 2 ausgegangen.

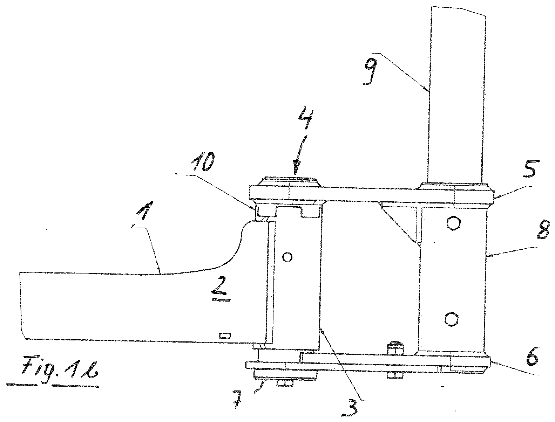

Am Ende des Rungenrahmens 2 ist gemäß den Darstellungen nach den Figuren 1a und 1b eine im Wesentlichen vertikal orientierte Buchse 3 vorgesehen, welche eine Achse 4 aufnimmt.

Die Achse 4 steht mit einem Schlossplattenpaar, umfassend die Schlossplatten 5 und 6 in Wirkverbindung. Die Achse 4 ist darüber hinaus über eine Schlossscheibe 7 mit dem Schlossplattenpaar verbunden, wobei das Schlossplattenpaar 5; 6, der Achse 4 und die Buchse 3 selbst so ausgebildet sind, dass ein Anheben in vertikale Richtung nach oben erfolgen kann.

Das Schlossplattenpaar 5; 6 geht in eine Rungensteckbuchse 8 über, die eine entsprechende Runge 9 aufnimmt.

Das Schlossplattenpaar 5; 6 bildet zusammen mit der Rungensteckbuchse 8 eine Rungenschwenkverbreiterung.

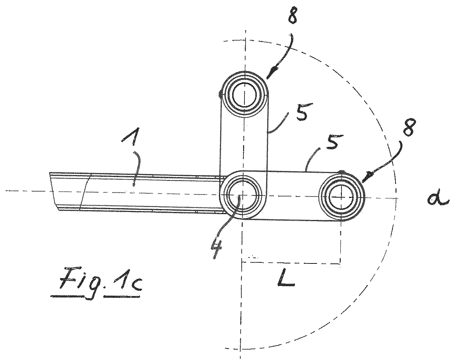

Die Verbreiterungslänge L und der Schwenkwinkel α sind in der Figur 1c illustriert.

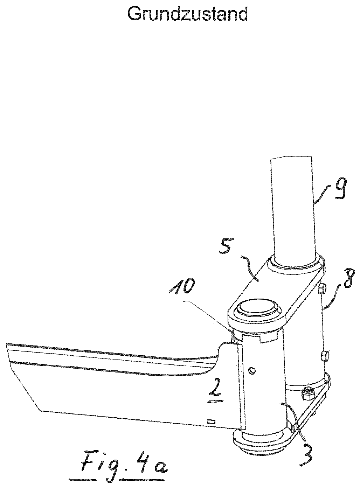

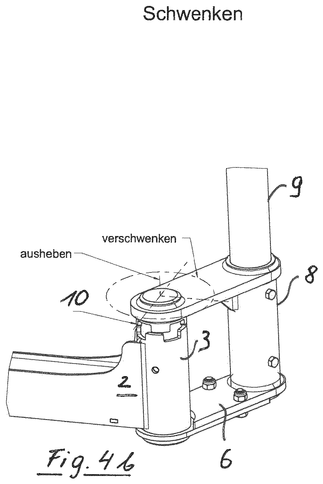

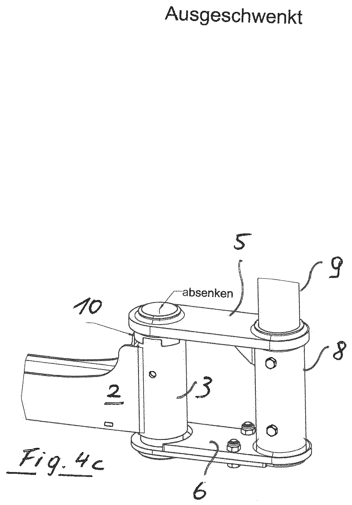

Die Figuren 4a bis 4c machen nun deutlich, wie die Rastkrone 10 realisiert ist.

Die Rastkrone 10 wird durch ein Rastkronenteil an der Buchsenoberseite und ein komplementäres Rastkronenteil an der Unterseite der oberen Schlossplatte realisiert.

Dies erfolgt derart, dass eine Arretierung in unterschiedlichen Schwenkpositionen realisierbar ist, wobei zum Entriegeln der jeweiligen Rastung ein Anheben der Rungenschwenkverbreiterung vorgenommen wird, derart, dass sich die Rastkronenpaarung aufhebt. Auch diese ist in der Abfolge der Figuren 4a bis 4c nachvollziehbar illustriert.

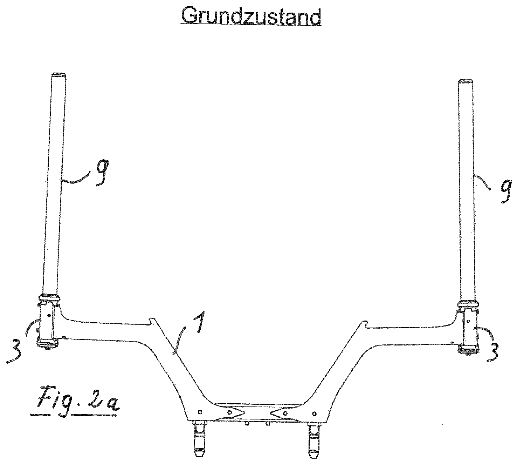

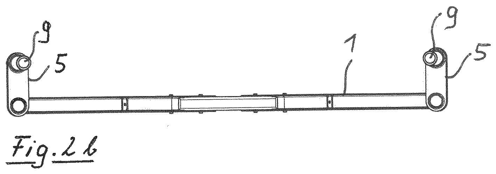

Die Darstellung nach den Figuren 2a bis 3b lassen den Grundzustand einer Rungenbank mit zwei beabstandeten Rungen und den verbreiterten, vollausgeschwenkten Zustand mit maximalem Abstand der gegenüberliegenden Rungen deutlich werden.

Die Rastkrone 10 bzw. die Rastkronenpaarung besteht aus einer Abfolge von mäanderartigen Vor- und Rücksprüngen, deren Weite die Winkelschritte der möglichen Schwenkpositionen bestimmt. Bevorzugt ist hier eine Abfolge von zinnenartigen Vor- und Rücksprüngen mit einer Rechteckform.

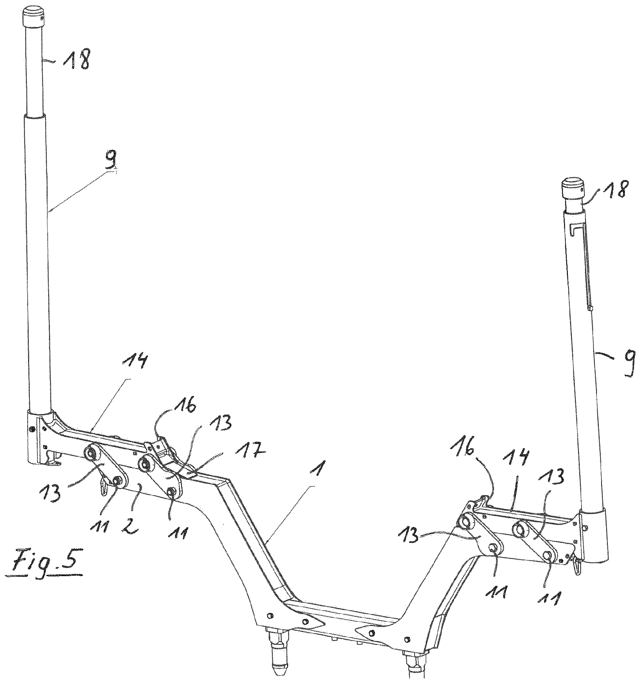

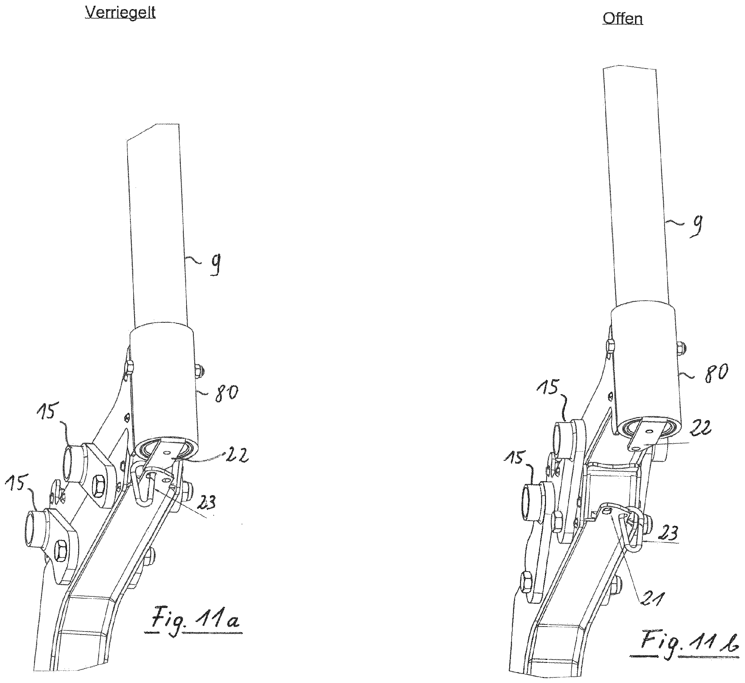

Die Figuren 5 bis 11a und 11b zeigen nun ein Ausführungsbeispiel mit einer Abstandsveränderung auf der Basis der Nutzung eines Parallelogrammgelenkes.

Zusätzlich zeigt die Figur 5 die Möglichkeit der Ausbildung eines teleskopierbaren, das heißt längenveränderlichen Rungenrohres 9.

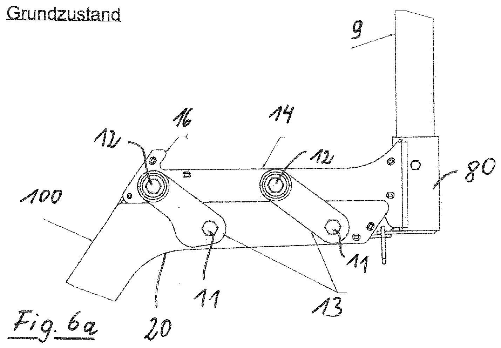

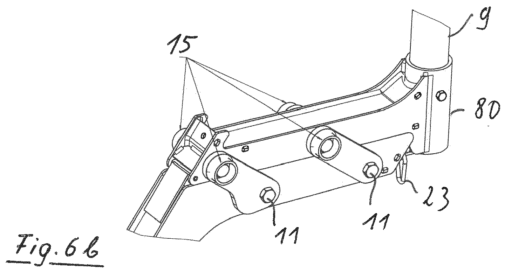

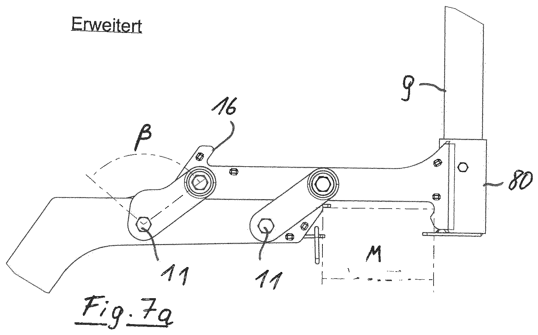

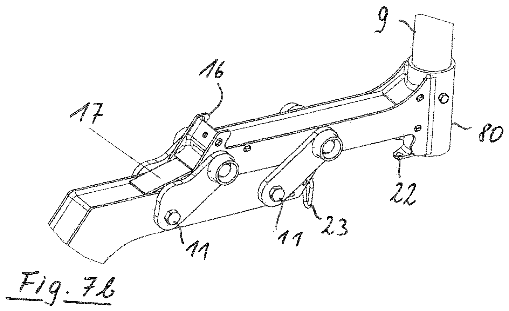

Insbesondere unter Nutzung der Figuren 6a, 6b, 7a und 7b ist die Ausbildung und die Funktion der Verstellung mittels Parallelogrammgelenk nachvollziehbar.

So wird am Rungenrahmen 20 der Rungenbank 100 das erwähnte Parallelogrammgelenk realisiert, welches aus zwei horizontal beabstandeten Rahmenachsen 11 und zwei horizontal beabstandeten Exzenterarmachsen 12 besteht. Die Achsen 11; 12 stehen jeweils mit einem Paar Gelenkplatten 13 in Wirkverbindung.

Weiterhin ist am Außenende des Exzenterarmes 14 eine Rungensteckbuchse 80 vorhanden, wobei der Exzenterarm 14 in einem Zug geführt durch das Parallelogrammgelenk von einer ersten horizontalen Position (Figur 6a;6b) in eine von der ersten beabstandeten, zweiten horizontalen Position (Figur 7a; 7b) beweglich ist.

Im Bereich der Exzenterarmachsen 12 am Exzenterarm 14 sind noch Schutzkragen 15 vorhanden, die als Greifhilfe dienen können. Weiterhin besteht die Möglichkeit, am Innenende des Exzenterarmes 14 einen Greifhaken 16 auszubilden.

Figur 7a lässt den Kippwinkel β und das maximale Verlängerungsmaß M deutlich werden.

Ein Schmutzabstreifer 17 verhindert das Anhaften von Verschmutzungen im Bewegungsbereich des Exzenterarmes 14.

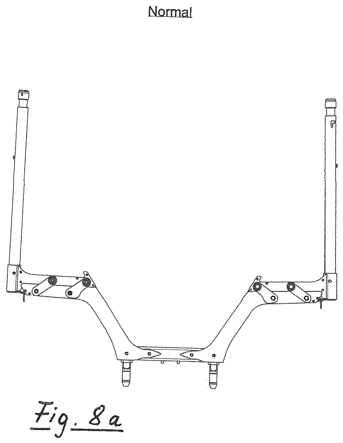

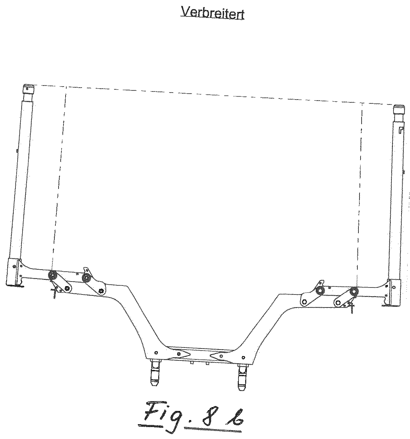

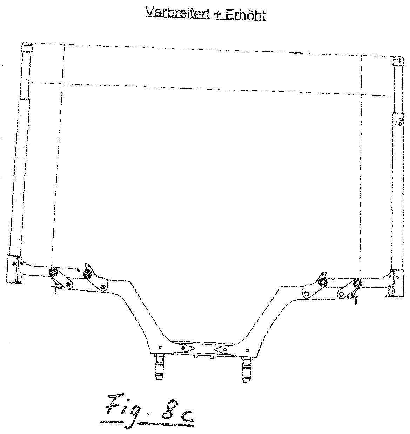

Die Figuren 8a bis 8c demonstrieren die unterschiedlichen Positionen der Rungen bei der Verstelllösung mittels Parallelogrammgelenk sowie die Möglichkeit der Verlängerung der Rungen durch teleskopartige Einsätze (Figur 8c).

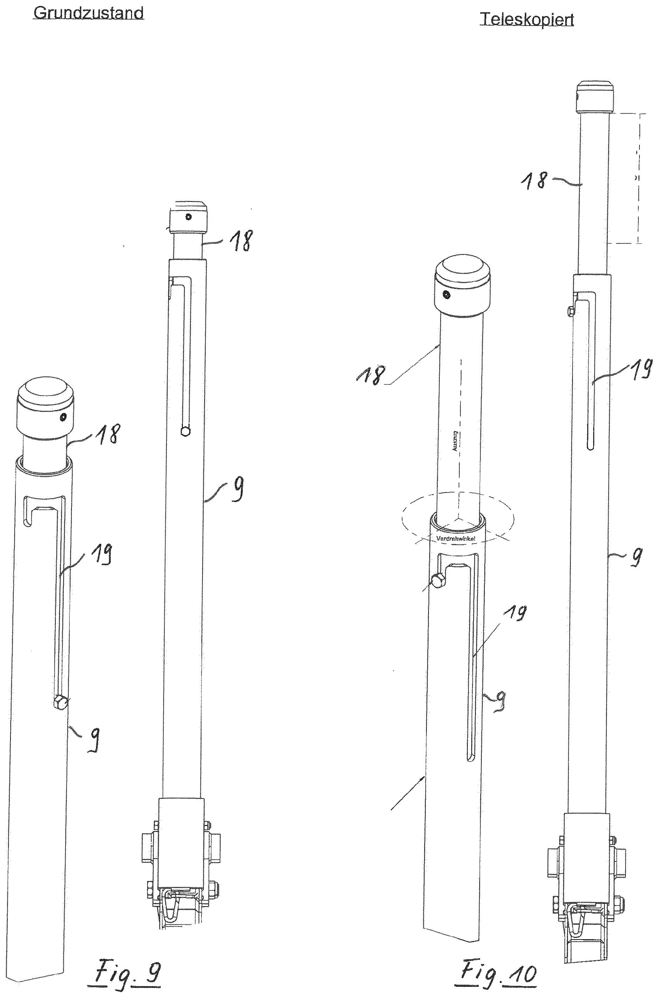

Diesbezüglich sei auch auf die Figuren 9 und 10 aufmerksam gemacht. Diese zeigen eine beispielhafte Möglichkeit einer Teleskopverlängerung mit der Möglichkeit der Arretierung des Teleskopeinsatzes 18 einer diesbezüglich ausgelegten Runge 9 mit Führungsnut 19.

Die Figuren 11a und 11b zeigen ein Ausführungsbeispiel für die Ausbildung von Verriegelungsmitteln zwischen Rahmen und Exzenterarm, beispielsweise durch eine Verriegelungslasche 21 am Rahmen der Rungenbank und die Anordnung einer Verriegelungslasche 22 an der Rungenaufnahmebuchse.

Die Verriegelung erfolgt hier durch entsprechende Ausnehmungen in den Laschen 21 und 22, durch Einführen eines Bolzens oder eines Verriegelungselementes 23, zum Beispiel in Form eines Karabinerhakens.

Die Verstelllösung mittels Parallelogrammgelenk bietet die vorteilhafte Möglichkeit, gleichzeitig mehrere Rungen in ihrer Position zu verlagern. Dies geschieht beispielsweise mit einem am Krangreifer horizontal hängenden Stamm, mit welchem nach Lösen der entsprechenden Verriegelungselemente auf mehrere der Rungen gleichzeitig eine seitliche Druckkraft ausgeübt wird.

## Patentansprüche

1. Anordnung zur Veränderung der Größe eines Lastraumes eines Lastentransportfahrzeuges oder eines Lastentransportanhängers, welche jeweils eine Vielzahl von Rungen (9) als seitliche Laststützen aufweisen, wobei die Runge (9) jeweils mit einem Rahmen (2; 20) einer Rungenbank (1; 100) in Verbindung stehen und mindestens ein Teil der Rungen (9) beweglich am Rahmen (2) gelagert ist, derart, dass eine Positionsveränderung der jeweiligen Rungen (9) zum Rahmen (2; 20) und damit eine Abstandsveränderung gegenüberliegender Rungen (9) realisierbar ist, wobei
die Mittel zur Abstandsveränderung gegenüberliegender Rungen (9) frei von einer Linear- oder Geradführung ausgebildet sind,
**dadurch gekennzeichnet, dass**
am rungenseitigen Ende des Rahmens (2) eine vertikal orientierte Buchse (3) vorgesehen ist, welche eine Achse (4) aufnimmt, die mit einem Schlossplattenpaar (5; 6) in Verbindung steht, welches in eine Rungensteckbuchse (8) übergeht, wobei das Schlossplattenpaar (5; 6) mitsamt der Rungensteckbuchse (8) um die genannte Achse (4) verschwenkbar ist, weiterhin die Buchsenoberseite eine Rastkrone (10) aufweist, welche zu einer Rastkrone an der Unterseite einer Schlossplatte des Schlossplattenpaares (5; 6) komplementär ist, derart, dass eine Arretierung in unterschiedlichen Schwenkpositionen realisierbar ist, wobei zum Entriegeln der jeweiligen Rastung ein Ausheben der Rastkronenpaarung erfolgt und die Verriegelungsstellung schwerkraftbedingt gehalten ist, oder am rungenseitigen Ende des Rahmens (20) ein Parallelogrammgelenk vorgesehen ist, welches zwei im Wesentlichen horizontal beabstandete Rahmenachsen (11) und zwei im Wesentlichen horizontal beabstandete Exzenterarmachsen (12) aufweist, die jeweils mit einem Paar Gelenkplatten (13) in Wirkverbindung stehen, weiterhin an seinem Außenende der Exzenterarm (14) in eine Rungensteckbuchse (80) übergeht, wobei der Exzenterarm (14) in einem Zug geführt durch das Parallelogrammgelenk von einer ersten horizontalen Position in eine zweite, von der ersten beabstandete horizontale Position beweglich ist.

2. Anordnung nach Anspruch 1,
**dadurch gekennzeichnet, dass**
die jeweilige Rastkrone (10) eine Abfolge von mäanderförmigen Vor- und Rücksprüngen aufweist, deren Weite die Winkelschritte der möglichen Schwenkpositionen bestimmt.

3. Anordnung nach Anspruch 1,
**dadurch gekennzeichnet, dass**
in der jeweiligen Rungensteckbuchse (8; 80) ein, auch teleskopierbares Rungenrohr (9) kraft- und/oder formschlüssig fixierbar ist.

4. Anordnung nach Anspruch 1,
**dadurch gekennzeichnet, dass**
im Bereich der Exzenterarmachsen (12) am Exzenterarm (14) jeweils mindestens ein Schutzkragen (15) ausgebildet ist, welcher gleichzeitig eine Greifhilfe zum Ausführen des Verschwenkens oder Verkippens zur Positionsveränderung bildet.

5. Anordnung nach Anspruch 4,
**dadurch gekennzeichnet, dass**
am Innenende des Exzenterarmes (14) ein Greifhaken (16) ausgebildet ist.

6. Anordnung nach Anspruch 4 oder 5,
**dadurch gekennzeichnet, dass**
am Rahmen (20) und am Exzenterarm (14) Verriegelungsmittel vorgesehen sind.

7. Anordnung nach einem der Ansprüche 1 oder 4 bis 6,
**dadurch gekennzeichnet, dass**
die jeweilige Rungensteckbuchse (80) eine, auch teleskopierbare Runge (9) aufweist.

8. Anordnung nach einem der vorangegangenen Ansprüche,
**dadurch gekennzeichnet, dass**
die jeweilige Rungensteckbuchse (8; 80) und Runge (9) eine bauliche Einheit bilden.

## Claims

1. Arrangement for changing the size of a cargo space of a cargo transport vehicle or a cargo transport trailer, which each have a plurality of stanchions (9) as lateral load supports, wherein the stanchions (9) are each connected to a frame (2; 20) of a bunk (1; 100) and at least a part of the stanchions (9) is movably mounted on the frame (2) such that a position change of the respective stanchions (9) in relation to the frame (2; 20) and therefore a distance change of opposing stanchions (9) is implementable, wherein
the means for the distance change of opposing stanchions (9) are formed free of a linear or straight guide,
**characterized in that**
a vertically oriented bushing (3) is provided at the stanchion-side end of the frame (2), which accommodates an axis (4) connected to a lock plate pair (5; 6), which merges into a stanchion socket (8), wherein the lock plate pair (5; 6) is pivotable together with the stanchion socket (8) around the mentioned axis (4), furthermore the bushing upper side includes a detent crown (10), which is complementary to a detent crown on the lower side of a lock plate of the lock plate pair (5; 6) such that locking is implementable in different pivot positions, wherein to unlock the respective detent, the detent crown pairing is canceled and the locking position is held due to gravity, or a parallelogram joint is provided at the stanchion-side end of the frame (10), which includes two frame axes (11) spaced apart essentially horizontally and two eccentric arm axes (12) spaced apart essentially horizontally, which are each operationally connected to a pair of joint plates (13), furthermore the eccentric arm (14) merges into a stanchion socket (80) at its outer end, wherein the eccentric arm (14) is movable in one step, guided by the parallelogram joint, from a first horizontal position into a second horizontal position spaced apart from the first.

2. Arrangement as claimed in claim 1,
**characterized in that**
the respective detent crown (10) includes a sequence of meandering projections and indentations, the width of which defines the angle steps of the possible pivot positions.

3. Arrangement as claimed in claim 1,
**characterized in that**
a stanchion tube (9), which can also be telescoped, is fixable in a friction-locked and/or formfitting manner in the respective stanchion socket (8; 80).

4. Arrangement as claimed in claim 1,
**characterized in that**
at least one protective collar (15) is formed in the area of each of the eccentric arm axes (12) on the eccentric arm (14), which at the same time forms a gripping aid for executing the pivoting or tilting for the position change.

5. Arrangement as claimed in claim 4,
**characterized in that**
a gripping hook (16) is formed at the inner end of the eccentric arm (14).

6. Arrangement as claimed in claim 4 or 5,
**characterized in that**
locking means are provided on the frame (20) and on the eccentric arm (14).

7. Arrangement as claimed in any one of claims 1 or 4 to 6,
**characterized in that**
the respective stanchion socket (80) includes a stanchion (9), which can also be telescoped.

8. Arrangement as claimed in any one of the preceding claims,
**characterized in that**
the respective stanchion socket (8; 80) and stanchion (9) form a structural unit.

## Revendications

1. Dispositif de modification de la taille d'un espace de chargement d'un véhicule de transport de charges ou d'une remorque de transport de charges, qui comportent chacun une pluralité de ranchers (9) servant de supports latéraux pour les charges, les ranchers (9) étant chacun reliés à un cadre (2 ; 20) d'un berceau (1 ; 100), et au moins une partie des ranchers (9) étants montés de façon mobile sur le cadre (2) de manière à permettre une modification de la position des ranchers respectifs (9) par rapport au cadre (2 ; 20) et donc une modification de la distance entre les ranchers opposés (9),
dans lequel
les moyens permettant de modifier la distance entre les ranchers opposés (9) sont conçus sans guidage linéaire ou rectiligne,
**caractérisé en ce que**
à l'extrémité côté rancher du cadre (2) est prévue une douille orientée verticalement (3) qui reçoit un axe (4) relié à une paire de plaques de serrure (5 ; 6) qui se prolonge par une douille d'insertion de rancher (8), la paire de plaques de serrure (5 ; 6) pouvant pivoter, conjointement avec la douille d'insertion de rancher (8), autour dudit axe (4), la face supérieure de la douille comportant en outre une couronne d'enclenchement (10) qui est complémentaire d'une couronne d'enclenchement sur la face inférieure d'une plaque de serrure de la paire de plaques de serrure (5 ; 6) de manière à permettre un blocage dans différentes positions de pivotement, sachant que le déverrouillage de l'enclenchement correspondant s'effectue par un dégagement de l'appariement de couronnes d'enclenchement et que la position de verrouillage est maintenue par la force de gravité, ou
à l'extrémité côté rancher du cadre (20) est prévue une articulation à parallélogramme qui présente deux axes de cadre (11) espacés sensiblement horizontalement et deux axes de bras excentrique (12) espacés sensiblement horizontalement, qui sont chacun en liaison active avec une paire de plaques d'articulation (13), et, à son extrémité extérieure, le bras excentrique (14) se prolonge par une douille d'insertion de rancher (80), le bras excentrique (14) pouvant être déplacé d'un seul coup, en étant guidé par l'articulation à parallélogramme, d'une première position horizontale à une deuxième position horizontale espacée de la première position horizontale.

2. Dispositif selon la revendication 1,
**caractérisé en ce que**
chaque couronne d'enclenchement (10) présente une succession de saillies et de retraits en forme de méandres dont l'espacement détermine les pas angulaires des positions de pivotement possibles.

3. Dispositif selon la revendication 1,
**caractérisé en ce que**
un tube de rancher (9), également télescopique, peut être fixé par adhérence et/ou par complémentarité de forme dans la douille d'insertion de rancher (8 ; 80) respective.

4. Dispositif selon la revendication 1,
**caractérisé en ce que**
au moins une collerette de protection (15) est formée dans la zone des axes de bras excentrique (12) sur le bras excentrique (14), laquelle forme en même temps une aide à la préhension pour effectuer le pivotement ou le basculement afin de modifier la position.

5. Dispositif selon la revendication 4,
**caractérisé en ce que**
un crochet de préhension (16) est formé à l'extrémité intérieure du bras excentrique (14).

6. Dispositif selon la revendication 4 ou 5,
**caractérisé en ce que**
des moyens de verrouillage sont prévus sur le cadre (20) et sur le bras excentrique (14).

7. Dispositif selon l'une des revendications 1 ou 4 à 6,
**caractérisé en ce que**
chaque douille d'insertion de rancher (80) comporte un rancher (9), également télescopique.

8. Dispositif selon l'une des revendications précédentes,
**caractérisé en ce que**
la douille d'insertion de rancher (8 ; 80) et le rancher (9) respectifs forment une unité structurelle.
